# EUROPEAN PATENT APPLICATION

(11) **EP 4 851 659 A1**
(43) Date of publication of application: **09.12.2026**
(21) Application number: 26181360.4
(22) Date of filing: 27.05.2026
(51) Int. Cl.: G01S 7/00, G01S 13/88, H04B 1/401

(54) **RESILIENT AND COMPACT APPARATUS AND METHOD FOR RADIO COMMUNICATIONS AND ALTIMETRY**

(30) Priority: 06.06.2025 US 202519230500
(71) Applicant: L3Harris Technologies, Inc., Melbourne, FL 32919 (US)
(72) Inventor: BUDUSON, James, Melbourne, 32919 (US); HOOD, James J., Melbourne, 32919 (US); BURKE, Peter, Melbourne, 32919 (US); GERLACH, Timothy, Melbourne, 32919 (US); BETTERIDGE, Gerald, Melbourne, 32919 (US)
(74) Representative: Schmidt, Steffen J.

(57) **Abstract**

Example embodiments provide a radio apparatus that includes processing circuitry configured to selectively operate the radio apparatus in a communications mode and in an altimeter mode, at least one antenna, and receiving circuitry and transmitting circuitry coupled to the processing circuitry. The receiving circuitry is configured, in a communications mode, to receive and downconvert a radio frequency (RF) signal from the at least one antenna to a baseband communication signal for processing by the processing circuitry. In an altimeter mode, the receiving circuitry is configured to receive and downconvert an RF signal received from the at least one antenna to a baseband altimeter signal. The processing circuitry processes the baseband altimeter signal into an altimeter output signal. The transmitting circuitry is configured in the communications mode to upconvert a baseband communication signal to an RF communication signal and transmit the RF communication signal over the at least one antenna. In the altimeter mode, transmitting circuitry is configured to upconvert a baseband altimeter signal to an RF altimeter signal and transmit the RF altimeter signal over the at least one antenna. The processing circuitry, the receiving circuitry, and the transmitting circuitry are configured to support both the communications mode and the altimeter mode thereby reducing size, weight, and/or power consumed.

## Description

Small lightweight unmanned aerial vehicles (UAVs) may use a variety of sensors to provide important sensor data to a flight controller in a UAV. These sensors detect information relating for example to position, velocity, and/or altitude of the UAV and/or a one or more targets. One such sensor is an altimeter which can allow a flight controller in the UAV to navigate the UAV relative to one or more targets autonomously. The inventors recognized benefits in integrating communication and sensing in some wireless communications environments and applications such as UAVs as well as other applications.

### SUMMARY

Example embodiments include a radio apparatus that includes processing circuitry configured to selectively operate the radio apparatus in a communications mode and in an altimeter mode, at least one antenna, and receiving circuitry and transmitting circuitry coupled to the processing circuitry. The receiving circuitry is configured, in a communications mode, to receive and downconvert a radio frequency (RF) signal from the at least one antenna to a baseband communication signal for processing by the processing circuitry. In an altimeter mode, the receiving circuitry is configured to receive and downconvert an RF signal received from the at least one antenna to a baseband altimeter signal. The processing circuitry processes the baseband altimeter signal into an altimeter output signal. The transmitting circuitry is configured in the communications mode to upconvert a baseband communication signal to an RF communication signal and transmit the RF communication signal over at least one antenna. In the altimeter mode, transmitting circuitry is configured to upconvert a baseband altimeter signal to an RF altimeter signal and transmit the RF altimeter signal over the at least one antenna. The processing circuitry, the receiving circuitry, and the transmitting circuitry are configured to support both the communications mode and the altimeter mode thereby reducing size, weight, and/or power consumed.

Example embodiments also include an unmanned aerial vehicle (UAV) including the apparatus described above where the processing circuitry is configured to provide resilience against jamming. Additional circuitry added to the receiving circuitry and the transmitting circuitry to support the altimeter mode weighs less than 50 g.

This Summary is provided to introduce a selection of concepts that are further described below in the Detailed Description. This Summary is intended neither to identify key features or essential features of the claimed subject matter, nor to be used to limit the scope of the claimed subject matter; rather, this Summary is intended to provide an overview of the subject matter described in this document. Accordingly, it will be appreciated that the above-described features are merely examples, and that other features, aspects, and advantages of the subject matter described herein will become apparent from the following Detailed Description, Figures, and Claims.

### BRIEF DESCRIPTION OF THE FIGURES

These and other features and advantages will be better and more completely understood by referring to the following detailed description of example non-limiting illustrative embodiments in conjunction with the drawings. Unless specific dimensions are given in a figure, the figures are not necessarily to scale and are schematic representations.
Figure 1A shows an example embodiment of a radio apparatus that integrates radio sensing with existing radio communications hardware and software with low size, weight, and power (SWaP) using a single antenna.
Figure 1B shows another example embodiment of a radio apparatus that integrates radio sensing with existing radio communications hardware and software with low size, weight, and power (SWaP) using a single antenna.
Figure 2 shows another example embodiment of a radio apparatus that integrates radio sensing with existing radio communications hardware and software with low SWaP using two antennas.
Figure 3 shows another example embodiment of a radio apparatus that integrates radio sensing with existing radio communications hardware and software with low SWaP using three antennas.
Figure 4 shows an example embodiment of a radio apparatus where an existing radio board is adapted to include altimetry functionality using an auxiliary board.
Figure 5 shows an example embodiment of the processing circuitry.
Figures 6A illustrates an example time slotted frame structure.
Figures 6B and 6C shows example graphs of a "chirp" transmit signal generated during one of the time slots in the frame structure of Figure 6A.
Figure 7 is a flowchart showing example procedures for example embodiments of the radio apparatus.

### DETAILED DESCRIPTION

Specific embodiments are shown by way of example in the drawings and will herein be described in detail. It should be understood, however, that the drawings and detailed description are not intended to limit the claims to the particular embodiments disclosed, even where only a single embodiment is described with respect to a particular feature. On the contrary, the intention is to cover all modifications, equivalents and alternatives that would be apparent to a person skilled in the art having the benefit of this disclosure. Examples of features provided in the disclosure are intended to be illustrative rather than restrictive unless stated otherwise.

As mentioned in the introduction, small, lightweight unmanned aerial vehicles (UAVs) may use a variety of sensors to provide important sensor data that may aid in flight control of the UAV. UAVs often must successfully navigate in low-to-medium altitude airspace in a radio frequency (RF) and altimeters are important in accomplishing this. However, UAVs also may be navigating in a contested environment where interference, including jamming and other interference, may undermine successful navigation. Radio altimeters may not be resilient, and when exposed to interference, especially jamming, may no longer report accurate position above ground level to the UAV's flight controller. This condition may cause the UAV to descend to lower altitudes, attempting to resolve the lack of accurate data from the altimeter, which may lead to the UAV crashing or otherwise failing to complete its mission.

A resilient/robust radio altimeter for UAVs is needed that can successfully and accurately function in an interference environment that can include active jamming signals. Example resiliency enhancements for radio altimeters may include anti-jamming techniques such as nulling, excision, anti-jamming antenna configurations, frequency hopping, spread spectrum, low probability of detection (LPD), low probability of intercept (LPI), and/or adaptive gain control.

However, dedicated radio altimeters in UAVs burden the UAV with additional size, weight, and power (SWaP) requirements. Dedicated radio altimeters that include resiliency enhancements further increase SWaP requirements. For example, a dedicated radio altimeter may weigh 4 to 5 pounds, consume over 30 watts of power, and will not fit into smaller UAVs such as Group 1 unmanned aerial systems (UAS) which must weigh less than 20 pounds. Adding 25% more weight to such UAVs also requires considerably more power for the UAV to fly.

The inventors resolved these competing objectives by integrating radio communications and sensing in radio applications so that existing radio communication hardware and also software running on that hardware may be leveraged to also provide resilient altimetry with minimal additional SWaP requirements to support the resilient altimetry. In example embodiments, this is accomplished by adding minimal altimetry related hardware to existing radio communications hardware and by using anti-jamming software that is likely already provided in resilient radio communications processing circuitry with some modification to that software.

Example embodiments of a resilient radio altimeter leverage described in this application add less than 50 g (0.11 lbs) to an existing radio communications apparatus while requiring only minimal additional power requirements, e.g., for frequency up conversion and analog to digital conversion. These embodiments provide a low SWaP radio altimeter that leverages existing radio communications platforms and also provides reliable radio altimetry that is resilient to interference including jamming. The power savings are particularly beneficial to any application that uses a battery or life-limited power source, including unmanned/uncrewed platforms such as vehicles, submersibles, boats/ships. Additionally, size and weight concerns are important for a number of other applications, such as a water-borne vessel where an integrator must make important trades between reserve of buoyancy, battery/fuel/power source and the size and weight of equipment integrated. Although these embodiments are beneficial for any radio communication that includes radio sensing where size, weight, and/or power are concerns, the following example embodiments are described in the context of radio altimetry and are particularly advantageous for UAV applications.

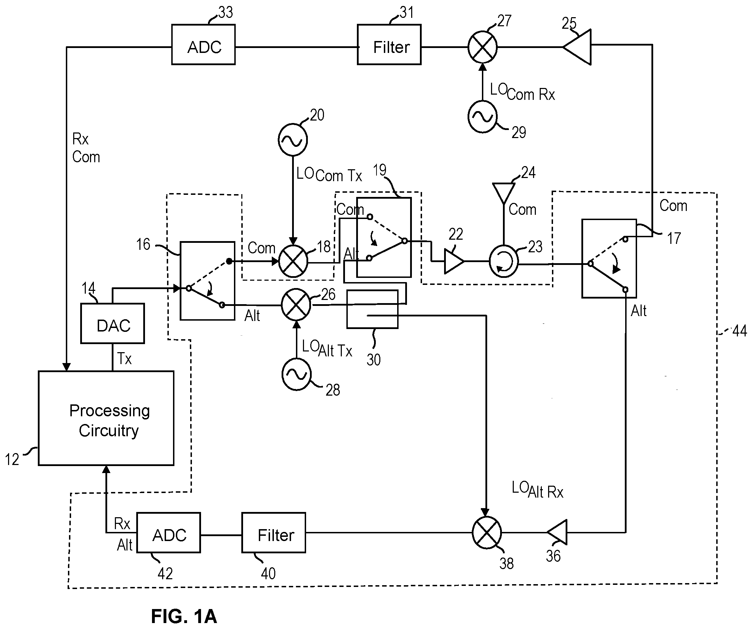

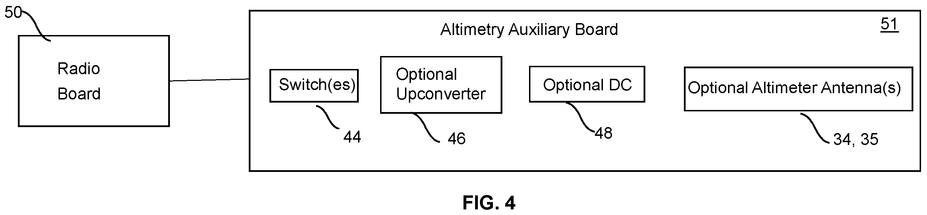

Figure 1A shows an example embodiment of a radio apparatus that integrates radio sensing with existing radio communications hardware and software with low size, weight, and power (SWaP) and uses a single antenna 24. Existing radios, used for example in UAVs, typically already include the elements not included in the dashed box. The radio altimetry elements in the dashed box are added to the existing radio, e.g., integrated directly with the existing radio board or added as an auxiliary board that couples to the radio board as shown in Figure 4.

The radio apparatus includes processing circuitry 12 configured to selectively operate the radio apparatus in a communications mode and in an altimeter mode, an antenna 24, and receiving circuitry described below and transmitting circuitry described below. In a communications mode, switch 16 is switched based on control signals from the processing circuity 12 to communications mode (Com) path(s). In communications mode, receiving circuitry is configured to receive RF signals from the antenna 24 via a circulator 23 because a switch 17 is switched to the Com terminal by the processing circuitry 12. The received RF signal is amplified in one or more low noise amplifiers 25 and downconverted in a mixer 27 which mixes it with a local communications (LO) communications (Com) receive (Rx) oscillator signal from LO 29 to generate a baseband communication signal. The baseband communication signal is filtered in filter 31 and converted to digital form in an analog to digital converter (ADC) 33 to provide a digital communications signal for processing by the processing circuitry 12. More components may be included in this communications receiver chain.

The communications transmitter chain is active when switches 16 and 19 are controlled to respective Com terminals by the processing circuitry 12. A digital baseband signal Tx is converted to analog form in a digital to analog converter (DAC) 14 and routed through the switch 16 to a transmit mixer 18 using a local oscillator (LO) communications (Com) transmit (Tx) signal generated by LO 20. The mixer outputs an RF communications transmit signal to Com terminal of switch 19 to be amplified in one or more power amplifiers 22 before being directed by circulator 23 to the antenna for transmission. More components may be included in the communications receiver chain and the communications transmitter chain than are shown.

In an altimeter mode, the processing circuity 12 controls switches 16 and 19 to activate altimeter (Alt) mode paths for transmission and switch 17 for reception. In the transmit altimeter path, a baseband digital altimeter signal is provided by the processing circuitry 12 and converted to analog format in DAC 14 and routed through the switch 16 to an altimeter transmit mixer 26 that also receives a local oscillator (LO) altimeter (Alt) transmit (Tx) signal generated by LO 28. The mixer 26 outputs an RF communications transmit signal that is coupled to a directional coupler 30 and then routed via a switch 19, switched to the Alt terminal by the processing circuitry 12, for amplification by the one or more power amplifiers 22 before being directed by the circulator 23 to the antenna 24 for transmission. To increase resilience to interference and jamming, the altimeter local oscillator 28 and the altimeter mixer 26 may be configured to upconvert the baseband altimeter signal into an RF frequency in one or more non-traditional frequency bands for example in the range of 1 GHz to 30 GHz, e.g., that may be known or predicted to not currently be subject to jamming like the X, KA, or KU bands. More components may be included in the altimeter transmitter chain.

For the reception altimeter path, an RF signal is received from the antenna 24 and routed through switch 17, switched to the Alt terminal by the processing circuitry 12, to one or more low noise amplifiers 36. The amplified output is downconverted to a baseband altimeter signal in an altimeter receive mixer 38 using a local oscillator (LO) signal LO_{AltRx} provided by the directional coupler 30 at or near the carrier frequency of the received altimeter RF signal by sampling the transmitter's RF altimeter signal output. Alternatively, a separate local oscillator may be used to generate LO_{AltRx} but this separate local oscillator adds further weight and expense. The received altimeter baseband signal is then filtered in a filter 40 and converted to digital format in an ADC 42 to provide a received altimeter digital signal to the processing circuitry 12. More components may be included in the altimeter receiver chain. One or more other resiliency enhancements for the altimeter mode may include anti-jamming techniques such as nulling, excision, anti-jamming antenna configurations, frequency hopping, spread spectrum, low probability of detection (LPD), low probability of intercept (LPI), and/or adaptive gain control. The processing circuitry 12 processes the baseband altimeter signal into an altimeter output signal.

The dashed box 44 shows altimetry components that may be added to existing radio communications hardware for the example embodiment in Figure 1A.

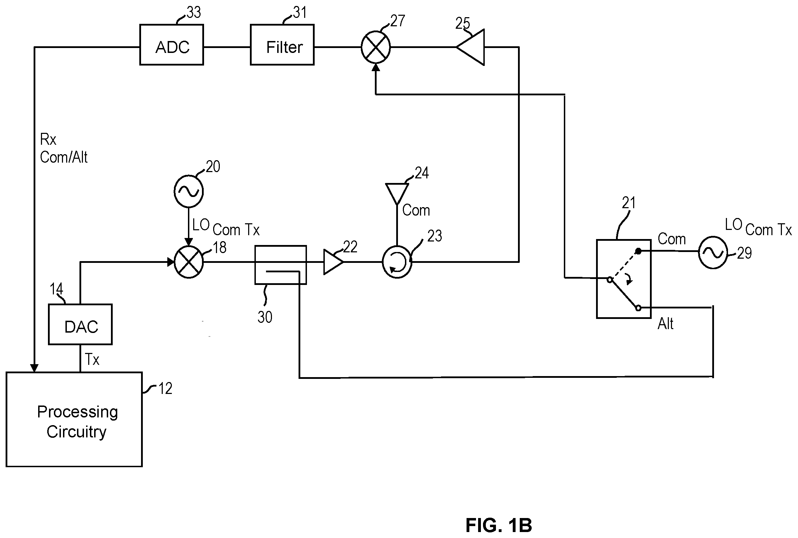

Figure 1B shows another example embodiment of a radio apparatus that integrates radio sensing with existing radio communications hardware and software with low size, weight, and power (SWaP) using single antenna 24. This example embodiment is similar to that in Figure 1A, but with fewer altimetry components added to existing radio communications hardware including the directional coupler 30, the circulator 23, and the switch 21. For transmission, the frequency generated by the transmit local oscillator 20 is controlled by the processing circuitry 12 to a communication transmit frequency in the communications mode and to an altimeter transmit frequency in the altimeter mode. For reception in the altimeter mode, the altimeter RF transmit signal detected by the directional coupler 30 is provided to the switch 21 to baseband at mixer 27 and input to the mixer 27 for downconverting an RF received altimeter signal from the antenna 24. The filter 31 and the ADC 33 in the existing radio are used to filter and digitize received baseband signals for both received radio communication signals and received altimetry signals. More components may be included in the transmitter and/or receiver chains. One or more other resiliency enhancements for the altimeter mode may include anti-jamming techniques such as nulling, excision, anti-jamming antenna configurations, frequency hopping, spread spectrum, low probability of detection (LPD), low probability of intercept (LPI), and/or adaptive gain control. The processing circuitry 12 processes the baseband altimeter signal into an altimeter output signal.

The example embodiments in Figures 1A and 1B require only minimal new hardware for the altimeter mode operation. For example, the embodiment in Figure 1B adds only a directional coupler 30, a circulator 23, and a switch 21 with other altimetry transmit and receive functions being performed by the processing circuitry 12 and/or existing transmitter and receiver components in the radio. This saves cost and reduces size and weight associated with providing the altimetry functionality.

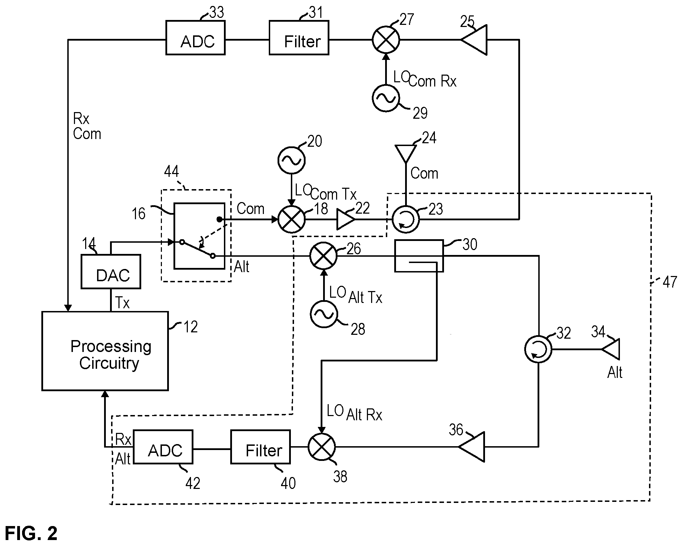

Figure 2 shows another example embodiment of a radio apparatus that integrates radio sensing with existing radio communications hardware and software with low SWaP that employs a separate altimeter antenna. The dedicated altimeter reduces the number of mode/path switches to a single switch 16. In the communication mode, the radio apparatus works in the same way as described for Figure 1. However, in the altimeter mode, the switch 16 is controlled to the Alt path, and the RF altimeter transmit signal is mixed in altimeter transmit mixer 26. The mixer 26 outputs an RF altimeter transmit signal, which is possibly amplified by one or more power amplifiers 22 not shown, before being directed by the circulator 32 to the altimeter antenna 34 for transmission. More components may be included in the altimeter transmitter chain. The altimeter receive path receives an RF altimeter signal from the altimeter antenna 34 which is directed by the circulator 32 to one or more LNAs 36. The amplified signal is downconverted to baseband in altimeter receive mixer 38 which uses the local oscillator signal LO_{AltRx} provided by the directional coupler 30 at or near the carrier frequency of the received altimeter RF signal by sampling the transmitter's RF altimeter signal output. Alternatively, a separate local oscillator may be used to generate LO_{AltRx}, but this separate local oscillator adds further weight and expense. The received altimeter baseband signal is then filtered in a filter 40 and converted to digital format in an ADC 42 to provide a received altimeter digital signal to the processing circuitry 12. Alternatively, the filter 31 and the ADC 33 in the existing radio may be used as shown for example in Figure 1B. More components may be included in the altimeter receiver chain. The processing circuitry processes the baseband altimeter signal into an altimeter output signal. The dashed box 47 shows altimetry components that may be added to existing radio communications hardware for the example embodiment in Figure 2.

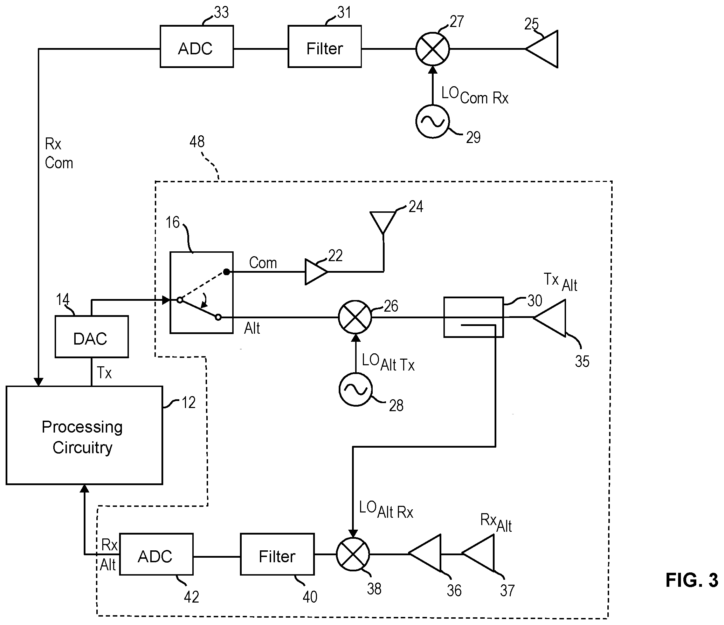

Figure 3 shows yet another example embodiment of a radio apparatus that integrates radio sensing with existing radio communications hardware and software with low SWaP where a separate altimeter transmit antenna 35 and a separate altimeter receive antenna 37 are used. The example embodiment operates similarly to the example embodiment in Figure 2 except that no altimeter circulator is needed. Instead, separate altimeter transmit antenna 35 transmits the RF altimeter transmit signal received from the directional coupler 30. The separate altimeter receive antenna 37 receives a received RF altimeter signal which is then routed to the one or more LNAs 36 and altimeter receive mixer 38 for processing as in Figure 2. The dashed box 48 shows altimetry components that may be added to existing radio communications hardware for the example embodiment in Figure 3.

Figure 4 shows an example embodiment of a radio apparatus where an existing radio board is adapted to include altimetry functionality using an auxiliary board. An existing radio board 50 contains for example the processing circuitry 12, the ADC(s), the filter(s), the DAC 14, one or more LOs, one or more mixers, one or more power amplifiers, one or more LNAs, and one or more antennas along with perhaps other components. An altimetry auxiliary board 51 is electrically connectable with the radio board 50 and may include one or more operational mode switches 44, an optional upconverter (mixer and LO) 46, an optional directional coupler 48, and one or more optional altimeter antennas like 34 and/or 35. The RF connection may be through the RF output connection via, for example, a Threaded Neill-Concelman (TNC) connector, a SubMiniature version A (SMA) connector, Micro-Miniature CoaXial (MMCX) connector, etc.). The data connection may be via data communication buses like i2C, CAN, RS 232, etc. In example embodiments, the altimetry auxiliary board 51 weighs less than 50 g.

An alternative example embodiment integrates the altimetry components and functionality into an existing radio board or unit and/or implements altimetry functionality using additional software program instructions stored in memory accessible to and executed by the processing circuitry 12. In example embodiments, the integrated altimetry components and functionality add less than 50 g to an existing radio board or unit.

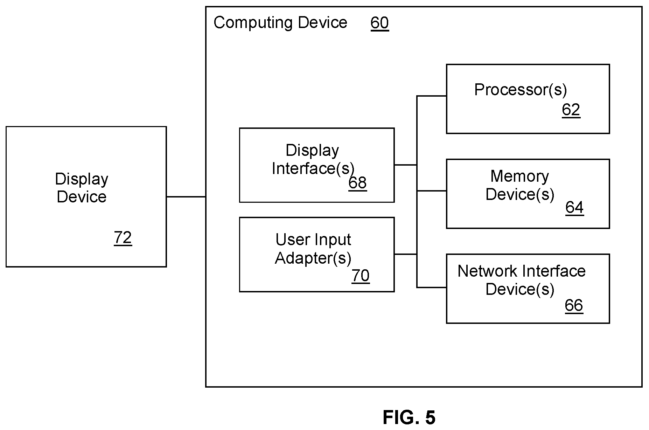

Figure 5 shows an example embodiment of the processing circuitry 12. An example computing device 60 (which may also be referred to, for example, as a "computing device," "computer system," or "computing system") includes one or more of the following: one or more hardware processors 62; one or more memory devices 64; one or more network interface devices 66; one or more display interfaces 68; and one or more user input adapters 70. Additionally, in some embodiments, the computing device 60 is connected to or includes a display device 72. These elements are hardware devices (for example, electronic circuits or combinations of circuits) that are configured to perform various different functions for the computing device 60.

In some embodiments, each or any of the hardware processors 62 is or includes, for example, a single-core or multi-core hardware processor, a microprocessor (e.g., which may be referred to as a central processing unit or CPU), a digital signal processor (DSP), a microprocessor in association with a DSP core, an Application Specific Integrated Circuit (ASIC), a Field Programmable Gate Array (FPGA) circuit, or a system-on-a-chip (SOC) (e.g., an integrated circuit that includes a CPU and other hardware components such as memory, networking interfaces, and the like). And/or, in some embodiments, each or any of the processors 62 uses an instruction set architecture such as x86 or Advanced RISC Machine (Arm).

In some embodiments, each or any of the memory devices 64 is or includes a random access memory (RAM) (such as a Dynamic RAM (DRAM) or Static RAM (SRAM)), a flash memory (based on, e.g., NAND or NOR technology), a hard disk, a magneto-optical medium, an optical medium, cache memory, a register (e.g., that holds instructions), or other type of device that performs the volatile or non-volatile storage of data and/or instructions (e.g., software that is executed on or by processors 62). Memory devices 64 are examples of non-volatile computer-readable storage media.

Each network interface device 66 may include one or more circuits (such as a baseband processor and/or a wired or wireless transceiver), and implements layer one, layer two, and/or higher layers for one or more wired communications technologies (such as Ethernet (IEEE 802.3)) and/or wireless communications technologies (such as Bluetooth, Wi-Fi (IEEE 802.11), GSM, CDMA2000, UMTS, LTE, LTE-Advanced (LTE-A), and/or other short-range, mid-range, and/or long-range wireless communications technologies). Transceivers may comprise circuitry for a transmitter and a receiver.

Each display interface 68 may include one or more circuits that receive data from the hardware processors 62, generate corresponding image data based on the received data, and/or output the generated image data to the display device 62, which displays the image data. A display interface 88 may include a video card, video adapter, or graphics processing unit (GPU).

Each user input adapter 70 may include one or more circuits that receive and process user input data from one or more user input devices (not shown) in communication with the computing device 60, and that output data based on the received input data to the hardware processors 62. Examples may include a PS/2 interface, a USB interface, a touchscreen controller, or the like; and/or the user input adapters 70 facilitates input from user input devices like a keyboard, mouse, trackpad, touchscreen, etc. The display device 72 may be a Liquid Crystal Display (LCD) display, Light Emitting Diode (LED) display, or other type of display device.

Whenever it is described that software performs an action, operation, or function, the action, operation, or function is in actuality performed by underlying hardware elements according to the program instructions that comprise the software stored in one or more of the memory devices 66.

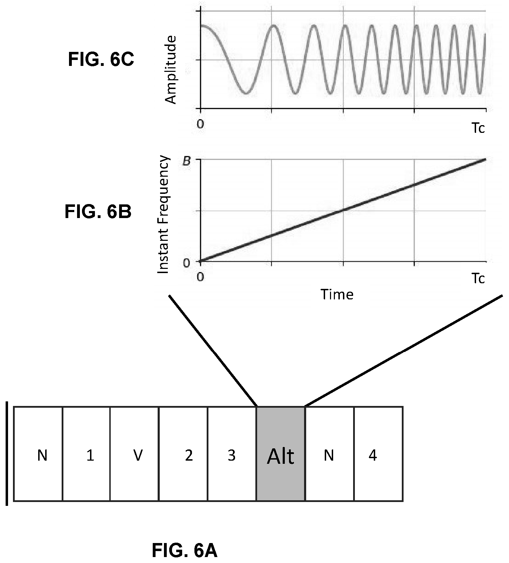

In example embodiments, the processing circuitry 12 may selectively operate the radio apparatus in the communications mode using one or more first radio resources and in the altimeter mode using one or more second radio resources different from the one or more first radio resources. The radio resources may be time slots, for example, and the communication mode and the altimeter mode may be activated and deactivated in a time division multiplex fashion under the control of the processing circuitry 12 using one or more of the switches described above. Figure 6A illustrates an example time-slotted frame structure. In this example, there are 8 time slots in a frame. In an example implementation, one of those time slots labelled "Alt" may be allocated for the altimetry mode and the remaining time slots allocated for the communications mode. Two or more time slots could be allocated for the altimeter mode, and other slot allocations are possible, e.g., the Alt time slot(s) may be a pseudo randomly scheduled TDMA slot by the processing circuitry 12. During the Alt time slot, an altimeter transmit signal is transmitted. Figures 6A-6C show an example of altimeter transmit signal corresponding to a "chirp" transmit signal commonly used in continuous-wave frequency-modulated (CWFM) radar where a known stable frequency radio wave is transmitted and then received from any reflecting objects. Also during the Alt time slot, altimeter receive signals are received using for example a switch (like switch 19 shown in Figure 1A) on the low loss output of the directional coupler 30 to the antenna circulator 23. Objects including the ground can be detected using the Doppler effect, which causes the received signal to have a different frequency from the transmitted signal, allowing it to be detected by filtering out the transmitted frequency. The Doppler effect is the change in the frequency of a wave in relation to an observer who is moving relative to the source of the wave. Doppler-analysis of radar returns can allow the filtering out of slow or non-moving objects, thus offering immunity to interference from large stationary objects and slow-moving clutter making for detecting objects against a background reflector.

The transmitted signal in the graph in Figure 6B is a stable frequency continuous wave that varies up and down in frequency over a fixed period of time by a modulating signal as shown in Figure 6C. The processing circuitry 12 controls the altimeter local oscillator 28 to continuously vary and modulate the frequency of the local oscillator signal during the Alt time slot. When a received reflected signal received during the Alt time slot is mixed with a sample of the current continuously changing transmitted frequency, the transmitted and received signals will not be at the same frequency when they are mixed. The result of this mixing is a beat signal, which has a frequency equal to the difference between the instantaneous transmitted frequency and the delayed reflected signal frequency. For a linear frequency sweep like that shown in Figure 6B, the instantaneous frequency changes at a constant rate, often denoted as the sweep slope k Hz/s. The frequency difference (or beat frequency) is directly proportional to the time delay. The frequency difference or beat signal is converted to digital format using the ADC 42 and processed by the processing circuitry 12 using for example the following set of equations to determine a one-way distance from the radio apparatus, e.g., included in a UAV, to the ground. $k = \frac{Δ {f}_{radar}}{Δ {t}_{radar}}$
where Δ*f_{radar}* is the radar frequency sweep amount and Δ*t_{radar}* is the time to complete the frequency sweep. Then, Δ*f_{echo}* = *t*,*k*, rearrange to a more useful: ${t}_{r} = \frac{Δ {f}_{echo}}{k} ,$ where *tᵣ* is the round trip time of the radar energy.
   It is then a trivial matter to calculate the physical one-way distance for an idealized typical case as: ${dist}_{oneway} = \frac{c ′ {t}_{r}}{2}$
where *c*' = *c*/*n* is the speed of light in any transparent medium of refractive index n (n=1 in vacuum and 1.0003 for air).
Repeating the linear change in frequency of the frequency modulating wave form during the Alt time slot of each frame effectively generates a sawtooth type waveform that results in a "chirp." In example embodiments, the chirp frequency window may be changed by the processing circuitry 12 for Alt time slots in different frames.

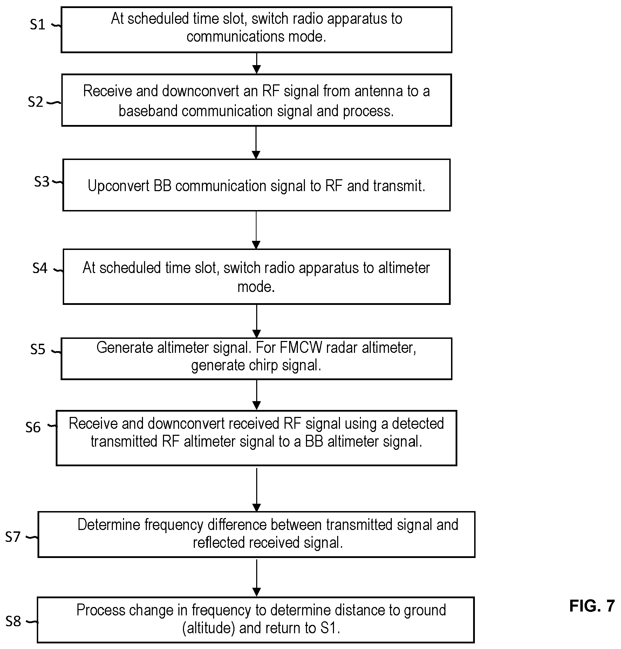

Figure 7 is a flowchart showing example procedures for example embodiments of the radio apparatus described above. In step S1, at a scheduled time slot, the processing circuitry 12 switches radio apparatus to communications mode. In step S2, the radio receives and downconverts a radio frequency (RF) signal from one or more antennas to a baseband communication signal and the processing circuitry 12 processes the communication signal. At the same time or a different time, the radio in step S3, upconverts a baseband communication signal to RF and transmit from the one or more antennas. At a scheduled Alt time slot, the processing circuitry 12 switches radio apparatus to altimeter mode and generates an altimeter transmit signal in step S5. As described for example embodiments above, for an FMCW based radar altimeter, the processing circuitry 12 generates a chirp signal. In step S6, the baseband altimeter signal is upconverted to RF (although example embodiments may have the processing circuitry 12 generate the RF altimeter transmit signal) and transmit an RF altimeter (e.g., chirp) signal from one or more antennas, e.g., to a frequency band that less likely to be jammed like X, KA, or KU bands. In step S6, an altimeter RF signal is received and downconverted using a detected transmitted RF altimeter signal to a baseband altimeter signal. The processing circuitry 12, in step S7, processes the received baseband altimeter signal along with the transmitted altimeter signal to determine a frequency difference. In step S8, the processing circuitry 12 processes the change in frequency to determine distance to ground (altitude) and control returns to step S1 continue this process for as long as needed/desired.

### EXAMPLE ADVANTAGES AND APPLICATIONS

Example advantages of the technology described above include a resilient and compact apparatus and method for radio communications and altimetry. Accurate altitude measurements are obtained even in hostile interference environments that has the potential to undermine successful navigation. In addition, resilient and accurate altimetry is accomplished with minimum additional size, weight, and power (SWaP) requirements. This is particularly beneficial for small UAVs. In addition to providing accurate altitude, the technology may be used as a UAV radar system to range between other friendly UAV's in a "UAV Swarm" and/or may also be used in a variety of systems to identify the range to a target or object of interest. Furthermore, many navigation systems rely on the ability to fly "Nap of the Earth" or identify their location based on the ability to gather an accurate series of radar altimetry messages and comparing them to an onboard database. The ability to navigate using terrain altitude mapping is especially important in an environment where other navigation aids, such as GPS, may be denied or unavailable.

Example applications of the technology described above include UAV applications, especially where interference is a problem and/or where size, weight, and/or power consumption are important considerations. In addition, the technology may be used for optionally piloted or manned applications. The resiliency features of the technology may be used in other applications where interference is a problem such as, for example, 5G cellular radio signals interfering with radar altimeters in civilian and commercial aircraft. Other example applications for the technology include other kinds of RF sensing like signals intelligence.

Although various embodiments have been shown and described in detail, the claims are not limited to any particular embodiment or example. None of the above description should be read as implying that any particular element, step, range, or function is essential. All structural and functional equivalents to the elements of the above-described embodiments that are known to those of ordinary skill in the art are expressly incorporated herein by reference and are intended to be encompassed. Features of the embodiments described above may be combined unless clearly technically impossible. Moreover, it is not necessary for a device or method to address each and every problem sought to be solved by the present invention, for it to be encompassed by the invention. No embodiment, feature, element, component, or step in this document is intended to be dedicated to the public.

Terms, such as first, second, and the like, may be used to describe various components. Each of these terminologies is not used to define an essence, order or sequence of a corresponding component but used merely to distinguish the corresponding component from other component(s). For example, a "first" component may be referred to as a "second" component, and similarly, the "second" component may be referred to as the "first" component. "Based on" as used herein covers based at least on. As used throughout this application, the word "may" is used in a permissive sense (i.e., meaning having the potential to), rather than the mandatory sense (i.e., meaning must). The singular forms "a", "an", and "the" are intended to include the plural forms as well, unless the context clearly indicates otherwise. It will be further understood that the terms "comprises/comprising" and/or "includes/including" when used herein, specify the presence of stated features, steps, operations, elements, and/or components, but do not preclude the presence or addition of one or more other features, integers, steps, operations, elements, components and/or groups thereof.

The same name may be used to describe an element included in the embodiments described above and an element having a common function. Once a component or function is described for one embodiment, that description is not repeated for other embodiments where that component or function operates or performs similarly. Unless disclosed to the contrary, a configuration of components disclosed in any embodiment may be applied to other embodiments, and the specific description of the repeated configuration will be omitted.

Unless otherwise defined, all terms used herein including technical or scientific terms have the same meaning as commonly understood by one of ordinary skill in the art to which an example belongs. Terms, such as those defined in commonly used dictionaries, are to be interpreted as having a meaning that is consistent with their meaning in the context of the relevant art and are not to be interpreted in an idealized or overly formal sense unless expressly so defined herein.

The term "about" or "approximately" means an acceptable error for a particular recited value, which depends in part on how the value is measured or determined. In certain embodiments, "about" can mean one or more standard deviations. When the antecedent term "about" is applied to a recited range or value it denotes an approximation within the deviation in the range or value known or expected in the art from the measurement's method. For removal of doubt, it is understood that any range stated herein that does not specifically recite the term "about" before the range or before any value within the stated range inherently includes such term to encompass the approximation within the deviation noted above.

## Claims

1. A radio apparatus, comprising:
(a) processing circuitry configured to selectively operate the radio apparatus in a communications mode and in an altimeter mode;
(b) at least one antenna;
(d) receiving circuitry coupled to the processing circuitry and configured:
in a communications mode, to receive and downconvert a radio frequency (RF) signal from the at least one antenna to a baseband communication signal for processing by the processing circuitry, and
in an altimeter mode, to receive and downconvert an RF signal received from the at least one antenna to a baseband altimeter signal, wherein the processing circuitry processes the baseband altimeter signal into an altimeter output signal; and
(e) transmitting circuitry coupled to the processing circuitry and configured to:
in the communications mode, upconvert a baseband communication signal to an RF communication signal and transmit the RF communication signal over the at least one antenna, and
in the altimeter mode, upconvert a baseband altimeter signal to an RF altimeter signal and transmit the RF altimeter signal over the at least one antenna.

2. The radio apparatus in claim 1, wherein the processing circuitry, the receiving circuitry, and the transmitting circuitry are configured to support both the communications mode and the altimeter mode thereby reducing size, weight, and/or power consumed.

3. The radio apparatus in claim 1, wherein the transmitting circuitry includes a switch controlled by the processing circuitry to switchably direct communication RF signals for transmission over the at least one antenna in the communications mode and switchably direct altimeter RF signals for transmission over the at least one antenna in the altimeter mode.

4. The radio apparatus in claim 1, wherein the transmitting circuitry includes a circulator coupled to the at least one antenna and configured in the altimeter mode to direct RF signals received on the at least one antenna to the receiving circuitry and direct RF altimeter signals to be transmitted to the at least one antenna.

5. The radio apparatus in claim 4, wherein the transmitting circuitry includes a directional coupler configured, in the altimeter mode, to extract a portion of the RF altimeter signal to be transmitted and provide the portion of the RF altimeter signal to the receiving circuitry to downconvert the RF signal received from the at least one antenna in the altimeter mode to the baseband altimeter signal.

6. The radio apparatus in claim 1, wherein the transmitting circuitry includes a directional coupler configured, in the altimeter mode, to extract a portion of the RF altimeter signal to be transmitted using the transmit antenna and provide the portion of the RF altimeter signal to the receiving circuitry to downconvert the RF signal received from the receive antenna to the baseband altimeter signal.

7. The radio apparatus in claim 1, wherein the transmitting circuitry includes:
an altimeter local oscillator to generate an altimeter local oscillator signal, and
an altimeter mixer configured to mix the altimeter local oscillator and the baseband altimeter signal to upconvert the baseband altimeter signal to an RF altimeter signal to be transmitted during the altimeter mode.

8. The radio apparatus in claim 7, wherein the processing circuitry is configured to selectively operate the radio apparatus in the communications mode using one or more first radio resources and in the altimeter mode using one or more second radio resources different from the one or more first radio resources, and
wherein the one or more first radio resources includes one or more communication time slots and the one or more second radio resources includes at least one altimeter time slot different from the one or more communication time slots.

9. The radio apparatus in claim 8, wherein the altimeter local oscillator is configured to vary a frequency of a local oscillator signal during the at least one altimeter time slot, and wherein altimeter mixer is configured to upconvert the baseband altimeter signal to an RF altimeter signal using the local oscillator signal.

10. The radio apparatus in claim 9, wherein the altimeter local oscillator is configured to continuously vary and modulate the frequency of a local oscillator signal during the at least one altimeter time slot.

11. The radio apparatus in claim 10, wherein during the altimeter mode, the RF signal received from the at least one antenna includes one or more echoes received from a target, and
wherein the transmitting circuitry includes a directional coupler configured, in the altimeter mode, to extract a portion of the RF altimeter signal to be transmitted and provide the portion of the RF altimeter signal to the receiving circuitry to mix with the one or more echoes received from a target to downconvert the RF signal received from the at least one antenna to the baseband altimeter signal.

12. The radio apparatus in claim 9, wherein the altimeter local oscillator and the altimeter mixer are configured to upconvert the baseband altimeter signal into an RF frequency in a range of 1 GHz to 30 GHz.

13. The radio apparatus in claim 1, wherein the at least one antenna includes a single antenna used in the communications mode and in the altimeter mode; and/or
wherein the at least one antenna includes at least one communications antenna used in the communications mode and at least one altimeter antenna used in the altimeter mode; and/or wherein the at least one antenna includes:
at least one communications antenna used in the communications mode, and
at least one altimeter transmit antenna and at least one altimeter receive antenna used in the altimeter mode; and/or
wherein the processing circuitry, the receiving circuitry, and the transmitting circuitry are integrated or configured as a single unit; and/or
wherein one or more parts of the receiving circuitry, and the transmitting circuitry are integrated or configured as an auxiliary radio unit to be coupled with a main radio unit that includes other parts of the receiving circuitry and the transmitting circuitry and the processing circuitry, and wherein the auxiliary unit weighs less than 50 g; and/or
wherein additional circuitry added to the receiving circuitry and the transmitting to support the altimeter mode weighs less than 50 g.

14. An unmanned aerial vehicle (UAV) including the apparatus of claim 1, wherein the processing circuitry is configured to provide resilience against jamming.

15. The UAV in claim 14, wherein additional circuitry added to the receiving circuitry and the transmitting circuitry to support the altimeter mode weighs less than 50 g.
